# EUROPÄISCHE PATENTSCHRIFT

(11) **EP 2 690 037 B1**
(45) Veröffentlichungstag und Bekanntmachung des Hinweises auf die Patenterteilung: **04.03.2015**
(21) Anmeldenummer: 13177399.6
(22) Anmeldetag: 22.07.2013
(51) Int. Cl.: B65G 53/42, F23K 3/02

(54) **Vorrichtung für das Ansaugen von Schüttgut**
Suction probe
Sonde d'aspiration

(30) Priorität: 23.07.2012 AT 8222012; 25.04.2013 AT 502852013
(43) Veröffentlichungstag der Anmeldung: 29.01.2014
(73) Patentinhaber: SOLARFOCUS Holding GmbH, 4451 Garsten (AT)
(72) Erfinder: Kalkgruber, Johann, 4421 Aschach an der Steyr (AT); Hinterplattner, Johann, 4423 Neuzeug (AT); Großauer, Johann, 4421 Aschach an der Steyr (AT)
(74) Vertreter: Burgstaller, Peter

(56) Entgegenhaltungen:
- DE-B- 1 230 720
- DE-C- 944 718
- DE-U1-202004 000 456

## Beschreibung

Die Erfindung betrifft eine am Boden eines Lagerraums anzubringende Vorrichtung für das Ansaugen von Schüttgut aus festen, nicht miteinander verbundenen Partikeln in eine pneumatische Förderstrecke.

Die erfindungsgemäße Vorrichtung ist gut dazu geeignet, stückige oder pulverförmige Brennstoffe wie insbesondere Brennstoffpellets vom Boden eines Brennstofflagerraums abzusaugen und einer pneumatischen Förderstrecke zuzuführen.

Die DE 20 2004 000 456 U1 zeigt eine gattungsgemäße Vorrichtung. Sie ist typischerweise am Boden eines Lagerraums für Brennstoffpellets angeordnet und kann durch eine Schüttung von Brennstoffpellets zugeschüttet sein. Durch den Aufbau der Vorrichtung soll erreicht werden, dass Partikel zwar in jenen Bereich rieseln können, von welchem sie durch die Saugleitung angesaugt werden können, nicht jedoch so stark dorthin fließen, dass sie die Saugleitung verstopfen können. Die Vorrichtung weist dazu ein etwa rechtwinkelig prismatisches Gehäuse und ein darüber angeordnetes und seitlich darüber hinausragendes Dach mit schräg nach außen abfallenden Dachflächen auf. Die Deckfläche des Gehäuses ist zur Dachfläche hin durch eine Öffnung durchbrochen. Die Saugleitung, in welche hinein das Schüttgut anzusaugen ist, durchdringt das Gehäuse in horizontaler Richtung und endet mit einer Öffnung außerhalb des Gehäuses aber noch unterhalb des Daches. Eine Zuluftleitung endet im Gehäuse. Im ordnungsgemäßen Betrieb wird die durch die Zuluftleitung in das Gehäuse zugeführte Luft auch wieder durch die Saugleitung abgesaugt. Nach dem Verlassen der Zuluftleitung strömt die Luft durch die Öffnung des Gehäuses aus diesem hinaus und unterhalb der Dachflächen unter Ausbildung von Wirbeln zur Öffnung der Saugleitung zurück. Partikel des Schüttgutes, welche in oder an das von der Dachfläche außerhalb des Gehäuses überdachte Volumen rieseln, werden von der Luft in die Saugleitung mitgerissen und durch die Saugleitung abtransportiert.

Die EP 1052456 A1 zeigt eine ähnliche Vorrichtung, welche auch ein etwa rechtwinkelig prismatisches Gehäuse und ein darüber angeordnetes und seitlich darüber hinausragendes Dach mit schräg nach außen abfallenden Dachflächen aufweist. Das prismatische Gehäuse besteht dabei aus zwei, seitlich offenen Prismen, welche übereinander angeordnet sind. Die Saugleitung endet im unteren Prisma. Die Zuluftleitung ist über der Saugleitung angeordnet, verläuft in dieselbe Richtung wir die Saugleitung und endet im oberen Prisma, wobei die Öffnungen der beiden Leitungen auf einer Ebene, welche einen Winkel von 90° zum Boden aufweist, liegen. Die den Leitungen gegenüberliegenden Flächen der beiden Prismen sind geschlossen. Dadurch erfolgen das Ausblasen der Zuluft und das Ansaugen der Förderluft an beiden Seiten der Vorrichtung links und rechts der Zuluftleitung und Saugleitung.

Die DE 1230720 B zeigt eine Saugdüse zum Ansaugen von Schüttgut gemäß dem Oberbegriff des Anspruchs 1, die durch eine bis in die Nähe des Düsenmundes reichende Trennwand in einen Fördergut- und einen Förderluftkanal unterteilt ist, wobei an den Förderkanal das Förderrohr der Saugluftförderanlage anschließt und der Förderluftkanal über ein nach oben gerichtetes, aus dem Schüttgut herausragendes Rohr mit der Atmosphäre in Verbindung steht.

Die der Erfindung zu Grunde liegende Aufgabe besteht darin, eine Vorrichtung für das Ansaugen von stückigen oder pulverförmigen Brennstoffen vom Boden eines Schüttgutlagerraumes in eine pneumatische Förderstrecke zu schaffen, wobei an der Vorrichtung eine Saugleitung und eine Zuluftleitung der pneumatischen Förderstrecke enden.

Gegenüber den aus den DE 20 2004 000 456 U1, EP 1052456 A1 und DE 1230720 B dazu bekannten Vorrichtungen soll die neu zu schaffende Vorrichtung bei mindestens gleich guter Funktion einfacher aufgebaut sein und in einer besonders bevorzugten Ausführungsform eine einfache Möglichkeit bieten die Vorrichtung an die örtlichen Gegebenheiten im Einsatzgebiet anzupassen.

Zum Lösen der Aufgabe wird eine Vorrichtung mit den Merkmalen des Anspruchs 1 vorgeschlagen.

In einer besonders bevorzugten Ausführungsvariante ist an der Zuluftleitung ein Dosierblättchen angebracht, welches von der Zuluftleitung in einem Winkel von vorzugsweise 90° Richtung Boden weist und so einen Teil der Saugleitung verdeckt. Dieses Dosierblättchen dient dazu, den Materialfluss in die Saugleitung zu beeinflussen, dahingehend, dass die Menge an angesaugtem Material eingestellt, bzw. begrenzt werden kann. Dadurch kann die erfindungsgemäße Vorrichtung an die örtlichen Gegebenheiten des Lagerraums (Größe, max. Füllstand...), des anzusaugenden Materials (Größe, Gewicht, Adhäsion...) und der Saugvorrichtung (Pumpenleistung, Leitungslänge, Leitungsdurchmesser...) angepasst werden. Dieses Anpassen an die örtlichen Gegebenheiten erfolgt, durch Wahl des geeigneten Dosierblättchens und Anbringen des Dosierblättchens an der passenden Stelle an der Zuluftleitung. Weiteres Anpassen kann vorzugsweise dadurch erfolgen, dass das Dosierblättchen verstellbar ausgeführt ist.
Gegenüber dem Stand der Technik ergeben sich folgende Vorteile:
- Sehr einfach aufgebaute Vorrichtung zum Ansaugen von Schüttgut.
- Über das Dosierblättchen kann die Menge des angesaugten Materials begrenzt, bzw. eingestellt werden.
- Durch das Dosierblättchen kann die Vorrichtung einfach an die örtlichen Gegebenheiten angepasst werden.
Die Erfindung wird an Hand von Zeichnungen veranschaulicht.
- Fig. 1:: zeigt eine beispielhafte vorteilhafte erfindungsgemäße Vorrichtung in seitlicher Teilschnittansicht.
- Fig. 2:: zeigt eine beispielhafte besonders vorteilhafte erfindungsgemäße Vorrichtung in seitlicher Teilschnittansicht.
- Fig. 3:: Zeigt die erfindungsgemäße Vorrichtung von vorne mit einem beispielhaft ausgeführten Dosierblättchen.
- Fig. 4:: Zeigt die erfindungsgemäße Vorrichtung von vorne mit einer anderen Variante des Dosierblättchens.
- Fig. 5:: Zeigt die erfindungsgemäße Vorrichtung von vorne mit einer verstellbaren Variante des Dosierblättchens.
- Fig. 6:: Zeigt die erfindungsgemäße Vorrichtung von vorne mit einer zweiten verstellbaren Variante des Dosierblättchens.
- Fig. 7:: Zeigt die erfindungsgemäße Vorrichtung von vorne mit einer vorteilhaften, weil platzsparenden und optisch ansprechenden Variante des Dosierblättchens.

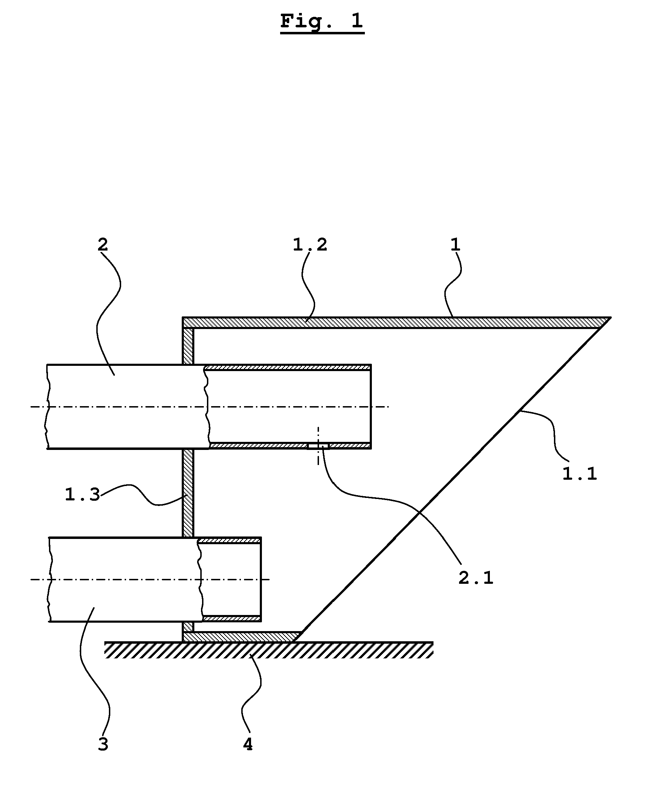

Die erfindungsgemäße Vorrichtung gemäß Fig. 1 besteht aus einem Hohlkörper 1, sowie den im Hohlkörper befindlichen Endbereichen der Zuluftleitung 2 und der Saugleitung 3. Bestimmungsgemäß ist die Vorrichtung am Boden 4 eines Lagerraums für Schüttgut angeordnet. Bei gefülltem Lagerraum ist die Vorrichtung durch das Schüttgut bedeckt. Für die fehlerfreie Funktion ist zwingend erforderlich, dass die Öffnungsfläche 1.1 des Hohlraumes von außen gesehen schräg überhängend ausgerichtet ist.

In der dargestellten vorteilhaften, weil sehr einfachen Ausführungsform ist der Hohlkörper 1 durch zwei starr miteinander verbundene Teile gebildet, wobei der eine Teil ein Hohlprofil 1.2 ist und der zweite Teil eine ebenes Flächenstück 1.3.

Das Hohlprofil ist mit horizontal ausgerichteter Profilrichtung angeordnet; an einer Seite ist es normal zur Profilrichtung abgeschnitten und an der gegenüberliegenden Seite schräg zur Profilrichtung. An der normal zur Profilrichtung verlaufenden Schnittfläche ist das Hohlprofil 1 durch das Flächenstück 1.3 verschlossen. An der schräg verlaufenden Schnittfläche bleibt das Hohlprofil 1.2 offen; die Schnittfläche umgrenzt die Öffnungsfläche 1.1 des Hohlkörpers 1. Das Flächenstück 1.3 ist vertikal ausgerichtet. Durch das Flächenstück 1.3 hindurch verlaufen Saugleitung 3 und Zuluftleitung 2 in den Hohlkörper 1 hinein.

Das Hohlprofil 1.2 ist typischerweise ein Rundrohr aus Stahl. Das Flächenstück 1.3 ist typischerweise ein Stück Stahlblech.

Es seien mehrere vorteilhafte, in Fig. 1 dargestellte Konstruktionsmerkmale kurz erwähnt:

Das Ende der Zuluftleitung 2 liegt höher als das Ende der Saugleitung 3.

Die Enden von Zuluftleitung 2 und Saugleitung 3 sind zur Öffnungsfläche 1.1 des Hohlkörpers 1 hin ausgerichtet.

Die Zuluftleitung 2 ragt in Richtung auf die Öffnungsfläche 1.1 über das Ende der Saugleitung 3 hinaus.

Gegenüber anderen Anordnungen bei denen dies nicht der Fall ist, ergeben sich damit günstigere Strömungsverhältnisse für das Ansaugen von Schüttgut in die Saugleitung 3.

In einer besonders vorteilhaften Ausführungsform weist die Mantelfläche des im Hohlkörper 1 befindlichen Teils der Zuluftleitung 2 in einem Abstand zum Ende der Zuluftleitung einen Durchbruch 2.1 auf dessen Querschnittsfläche kleiner ist als die Querschnittsfläche der Öffnung am Leitungsende. Bevorzugt ist der Durchbruch an jener Mantelflächenseite der Zuluftleitung angeordnet, welche der Saugleitung zugewandt liegt. Dieser Durchbruch 2.1 ist dann sehr wertvoll, wenn das die Vorrichtung umgebende Schüttgut zu sehr in den durch den Hohlkörper 1 umgrenzten Raum hineingedrückt wurde, verpackt und das Ende der Zuluftleitung 2 ganz oder teilweise verstopft. Durch den dann immer noch möglichen, dann sehr raschen Luftstrom durch den Durchbruch 2.1 wird der verpackte Bereich des Schüttgutes nach und nach wieder abgetragen, bis sich die Verstopfung wieder auflöst.

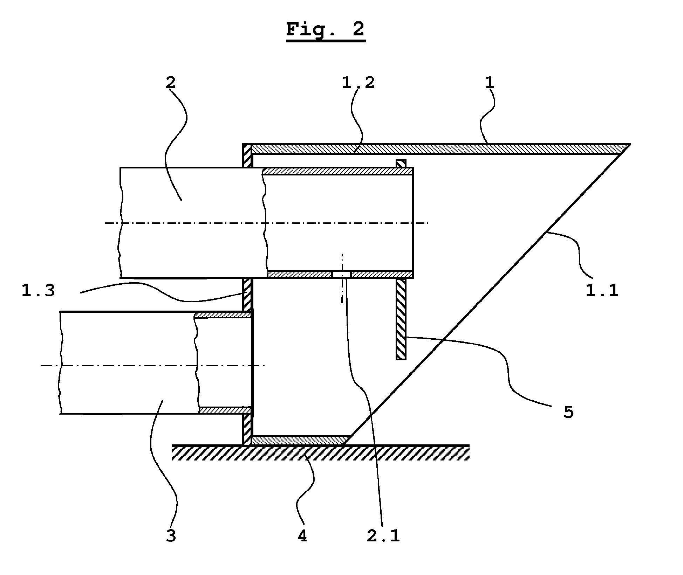

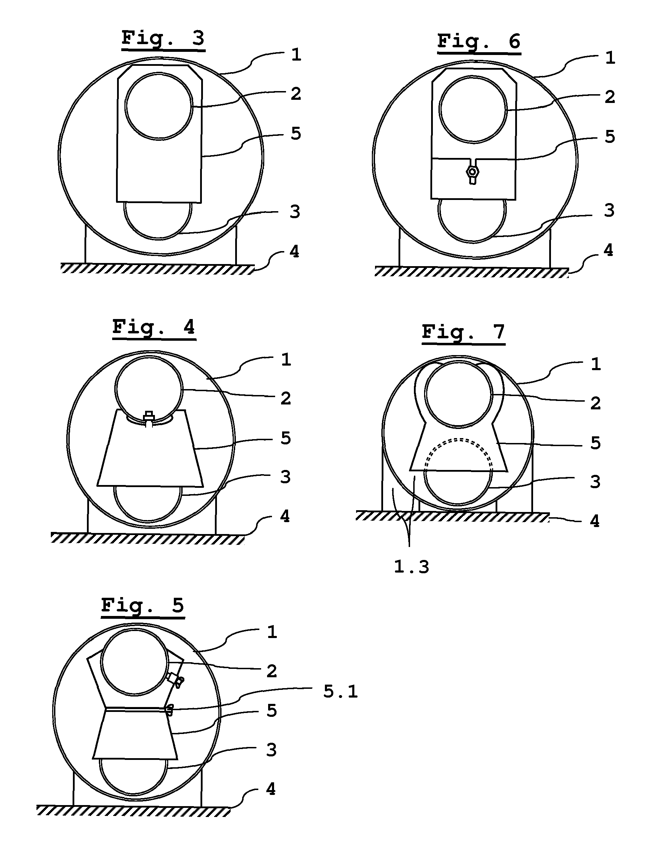

In Fig. 2 ist in einer besonders vorteilhaften erfindungsgemäßen Ausführung vorgesehen ein Dosierblättchen 5 anzubringen, um das Ansaugen des Schüttgutes weiter zu verbessern. Das Dosierblättchen 5 ist an der Zuluftleitung 2 befestigt. Bevorzugt weist es von diesem in einem Winkel von 90° Richtung Boden beziehungsweise senkrecht nach unten. Es ist natürlich auch möglich das Dosierplättchen 5 schräg zu montieren, sodass sein unteres dem Boden 4 zugewandtes Ende näher an der Saugleitung 3 oder weiter entfernt von dieser ist, als sein oberes an der Zuluftleitung 2 montiertes Ende. Im einfachsten Fall ist das Dosierblättchen aus einem Blech ausgestanzt und an seinem oberen Ende an der Zuluftleitung befestigt, wie in Fig. 3 gezeigt. Dabei wird das Dosierblättchen 5 an die gewünschte Position auf die Zuluftleitung geschoben und dort fixiert, beispielsweise durch Kleben oder Schweißen.

In einer bevorzugten Ausführungsvariante ist das Dosierblättchen 5 verstellbar ausgeführt, so wie in den Figuren 4, 5 und 6 gezeigt. Beim Beispiel nach Fig. 5 kann eine Verstellbarkeit der Position des Dosierplättchens 4 an der Zuluftleitung 2 erreicht werden, indem das Dosierplättchen 4 am oberen Ende eine Ausnehmung aufweist, welche die Zuluftleitung 2 zumindest teilweise umschließt wobei zwischen Dosierblättchen 4 und Zuluftleitung so viel Spiel verbleibt, dass das Dosierblättchen 4 entlang der Zuluftleitung 2 verschoben werden kann. Über eine Klemmvorrichtung (Klemmschraube oder Feststellhebel mit Exzenter) kann das Dosierblättchen 4 in der gewünschten Position fixiert werden. Natürlich sind diesbezüglich auch andere Varianten denkbar. Wie in Fig. 4 gezeigt kann sich im unteren Mantelbereich der Zuluftleitung 2 eine Nut befinden, in welche das Dosierblättchen 4 eingehängt wird und über eine Schraube fixiert wird.

In Fig. 5 ist gezeigt, wie die Winkelstellung des Dosierblättchens 5 verändert werden kann. Dies geschieht in diesem Beispiel über ein klemmbares Scharniergelenk 5.1, welches in einer beliebigen Winkelstellung fixiert werden kann. Dadurch kann die Distanz des unteren Endes des Dosierblättchens 5 zur Öffnung der Saugleitung 3 verändert werden.

Fig. 6 zeigt ein Beispiel für ein in seiner Länge veränderliches Dosierplättchen 5. Dies wird dadurch erreicht, dass das Dosierblättchen aus zwei Blechteilen gebildet wird, wobei ein Blechteil eine Nut aufweist und das andere einen Gewindebolzen, oder ein Loch, durch welches eine Schraube gesteckt werden kann.

Durch fixieren einer Mutter am Gewindebolzen bzw. der Schraube kann der eine Blechteil am anderen Blechteil in einer verstellbaren Höhe fixiert werden.

Fig. 7 zeigt eine Vorteilhafte Variante des Dosierblättchens 5, welche besonders platzsparend und optisch ansprechend ist. Dabei wird die Zuluftleitung 2 durch zwei Blechflügel umfasst, welche eine abgerundete Form aufweisen und daher exakt in den verbleibenden Raum zwischen der Oberseite der Zuluftleitung 2 und des Hohlkörpers 1 eingepasst werden können. Die Befestigung des Dosierblättchens 2 kann so durch Presspassung erfolgen. Die in den

Fig. 4,5 und 7 dargestellte Form des Dosierblättchens mit einer trapezförmigen Ausgestaltung im unteren Bereich hat sich als vorteilhaft erwiesen, da bei verbesserter Funktionalität eine Materialeinsparung erzielt werden kann. Die in den Fig. 3-7 gezeigten Varianten des Dosierblättchens können im Bereich des fachmännischen Handelns kombiniert, ergänzt und variiert werden, vor allem in Bezug auf die Verstellmechanismen.

## Patentansprüche

1. Am Boden eines Lagerraums anzubringende Vorrichtung für das Ansaugen von Schüttgut aus festen, nicht miteinander verbundenen Partikeln aus dem Lagerraum in eine pneumatische Förderstrecke, wobei an der Vorrichtung eine Saugleitung (3) der pneumatischen Förderstrecke mit ihrem Ansaugende endet und eine Zuluftleitung (2) mit ihrem Auslassende,
wobei die Vorrichtung einen einseitig offenen Hohlkörper (1) umfasst, dessen erste Öffnungsfläche (1.1) von außen gesehen schräg nach oben und außen überhängend ausgerichtet ist, wobei Saugleitung (3) und Zuluftleitung (2) im Hohlkörper (1) enden, wobei das Ende der Zuluftleitung (2) höher liegt als das Ende der Saugleitung (3) und die Enden von Zuluftleitung (2) und Saugleitung (3) zur ersten Öffnungsfläche (1.1) des Hohlkörpers (1) hin ausgerichtet sind,
**dadurch gekennzeichnet, dass**
der Hohlkörper (1) durch ein liegend am Lagerraumboden anzuordnendes Hohlprofil (1.2) und ein Flächenstück (1.3), welches eine zweite Öffnungsfläche des Hohlprofils (1.2) verschließt, gebildet ist und dass
die Saugleitung (3) und Zuleitung (2) durch das der ersten Öffnungsfläche (1.1) gegenüberliegende Flächenstück (1.3) in den Hohlkörper (1) hinein verlaufen.

2. Vorrichtung nach Anspruch 1 **dadurch gekennzeichnet, dass** das Hohlprofil (1.2) durch ein Rundrohr aus Stahl gebildet ist.

3. Vorrichtung nach einem der Ansprüche 1 bis 2, **dadurch gekennzeichnet, dass** die Zuluftleitung (2) in Richtung auf die Öffnungsfläche (1.1) über das Ende der Saugleitung (2) hinausragt.

4. Vorrichtung nach einem der Ansprüche 1 bis 3, **dadurch gekennzeichnet, dass** die Mantelfläche des im Hohlkörper (1) befindlichen Teils der Zuluftleitung (2) in einem Abstand zum Ende der Zuluftleitung einen Durchbruch (2.1) aufweist, dessen Querschnittsfläche kleiner ist als die Querschnittsfläche der Öffnung am Leitungsende der Zuluftleitung.

5. Vorrichtung nach Anspruch 4, **dadurch gekennzeichnet, dass** der Durchbruch (2.1) am saugleitungsseitigen Teil der Mantelfläche der Zuluftleitung (2) liegt.

6. Vorrichtung nach einem der Ansprüche 1 bis 5, **dadurch gekennzeichnet, dass** an der Zuluftleitung (2) ein Dosierblättchen (5) angebracht ist, welches von der Zuluftleitung (2) in Richtung der Saugleitung (3) weist und zwar vorzugsweise in einem Winkel von 90° in Richtung des Bodens (4).

7. Vorrichtung nach Anspruch 6, **dadurch gekennzeichnet, dass** die Öffnung der Saugleitung (3), aus Richtung der Öffnungsfläche (1.1) gesehen, teilweise durch das Dosierblättchen (5) verdeckt ist.

8. Vorrichtung nach einem der Ansprüche 6 und 7, **dadurch gekennzeichnet, dass** das Dosierblättchen (5) ein Blechstück ist.

9. Vorrichtung nach einem der Ansprüche 6 bis 8, **dadurch gekennzeichnet, dass** die Position des Dosierblättchens (5) an der Zuluftleitung (2), der Winkel in welchem das Dosierblättchen (5) Richtung Boden (4) weist oder die Längenausdehnung des Dosierblättchens (5) Richtung Boden (4) verstellbar ist.

10. Vorrichtung nach einem der Ansprüche 6 bis 9, **dadurch gekennzeichnet, dass** das Dosierblättchen (5) an seinem unteren dem Boden (4) zugewandten Ende eine größere Breite aufweist, als im Bereich zwischen Saugleitung (3) und Zuluftleitung (2).

11. Vorrichtung nach einem der Ansprüche 1 bis 10, **dadurch gekennzeichnet, dass** sie dazu dient, stückige oder pulverförmige Brennstoffe vom Boden eines Brennstofflagerraums abzusaugen.

12. Vorrichtung nach Anspruch 11, **dadurch gekennzeichnet, dass** die Brennstoffe Brennstoffpellets sind.

## Claims

1. A device to be placed on the floor of a storage room, used to draw in bulk goods composed of solid, individual particles from the storage room into a pneumatic conveyor section, wherein in the device a suction line (3) of the pneumatic conveyor section ends with its suction end and an air supply duct (2) ends with its outlet end,
wherein the device includes a hollow body (1) open on one side, of which the first opening area (1.1), viewed from the outside, runs upward diagonally and overhangs to the outside, wherein the suction line (3) and the air supply duct (2) end in the hollow body (1), with the end of the air supply duct (2) being higher than the end of the suction line (3) and the ends of the air supply duct (2) and the suction line (3) are aligned towards the first opening area (1.1) of the hollow body (1), **characterised in that** the hollow body (1) is formed by a hollow profile (1.2) lying on the floor of the storage room and a flat piece (1.3) which closes a second opening area of the hollow profile (1.2) and that
the suction line (3) and the air supply duct (2) pass into the hollow body (1) through the flat piece(1.3) opposite the first opening area (1.1).

2. Device according to claim 1, **characterised in that** the hollow profile (1.2) is formed by a round steel pipe.

3. Device according to one of the claims 1 to 2, **characterised in that** the air supply duct (2) overhangs in the direction of the opening area (1.1) over the end of the suction line (2).

4. Device according to one of the claims 1 to 3, **characterised in that** the lateral surface of the air supply duct (2) located in the hollow body (1) features a perforation (2.1) at a distance from the end of the air supply duct, with its cross-sectional area being smaller than the cross-sectional area of the opening at the end of the air supply duct.

5. Device according to claim 4, **characterised in that** the perforation (2.1) is located on the lateral surface of the air supply duct (2) on the suction line side.

6. Device according to one of the claims 1 to 5, **characterised in that** a metering leaf (5) is attached to the air supply duct (2), which points towards the suction line (3) from the air supply duct (2) preferably at an angle of 90° in the direction of the floor (4).

7. Device according to claim 6, **characterised in that** the opening of the suction line (3), viewed from the direction of the opening area (1.1), is partially covered by the metering leaf (5).

8. Device according to one of the claims 6 and 7, **characterised in that** the metering leaf (5) is a piece of sheet metal.

9. Device according to one of the claims 6 to 8, **characterised in that** the position of the metering leaf (5) on the air supply duct (2), the angle in which the metering leaf (5) points towards the floor (4) or the extension of the metering leaf (5) towards the floor (4) is adjustable.

10. Device according to one of the claims 6 to 9, **characterised in that** the width of the lower end of the metering leaf (5) facing the floor (4) is bigger than the width of the metering leaf (5) in the area between the suction line (3) and the air supply duct (2).

11. Device according to one of the claims 1 to 10, **characterised in that** it is used to draw in bulk or powdery solid fuels from the floor of a fuel storage room.

12. Device according to claim 11, **characterised in that** the solid fuels are fuel pellets.

## Revendications

1. Dispositif à installer au sol d'un entrepôt pour l'aspiration de produits en vrac composés de particules solides, non liées les unes aux autres, hors de l'entrepôt dans une voie de transport pneumatique, un canal d'aspiration (3) de la voie de transport pneumatique aboutissant audit dispositif avec son extrémité d'aspiration et un canal d'admission d'air (2) avec son extrémité d'évacuation,
le dispositif englobant un corps creux (1) ouvert d'un côté, dont la première surface d'ouverture (1.1) est orientée, vue de l'extérieur, en incliné vers le haut et en porte-à-faux vers l'extérieur, le canal d'aspiration (3) et le canal d'admission d'air (2) aboutissant dans le corps creux (1), l'extrémité du canal d'admission d'air (2) étant placée plus haut que l'extrémité du canal d'aspiration (3) et les extrémités du canal d'admission d'air (2) et du canal d'aspiration (3) étant orientées vers la première surface d'ouverture (1.1) du corps creux (1), **caractérisé en ce que** le corps creux (1) est formé par un profil creux (1.2) à disposer de façon couchée sur le sol de l'entrepôt et un élément de surface (1.3) qui referme une seconde surface d'ouverture du profil creux (1.2), et **en ce que**
le canal d'aspiration (3) et le canal d'admission (2) se dirigent à l'intérieur du corps creux (1) en traversant l'élément de surface (1.3) placé en face de la première surface d'ouverture (1.1).

2. Dispositif selon la revendication 1, **caractérisé en ce que** le profil creux (1.2) est formé par un tube en acier rond.

3. Dispositif selon l'une des revendications 1 à 2, **caractérisé en ce que** le canal d'admission d'air (2) est placé dans le sens de la surface d'ouverture (1.1) en porte-à-faux au-delà de l'extrémité du canal d'aspiration (2).

4. Dispositif selon l'une des revendications 1 à 3, **caractérisé en ce que** la surface d'enveloppe de la partie du canal d'admission d'air (2) qui se trouve dans le corps creux (1), comporte un passage (2.1) espacé de l'extrémité du canal d'admission d'air, dont la section transversale est plus petite que la section transversale de l'ouverture à l'extrémité du canal d'admission d'air.

5. Dispositif selon la revendication 4, **caractérisé en ce que** le passage (2.1) se situe sur la pièce côté canal d'aspiration de la surface d'enveloppe du canal d'admission d'air (2).

6. Dispositif selon l'une des revendications 1 à 5, **caractérisé en ce que** le canal d'admission d'air (2) porte une lamelle de dosage (5) qui montre du canal d'admission d'air (2) en direction du canal d'aspiration (3), c'est-à-dire de préférence dans un angle de 90° vers le sol (4).

7. Dispositif selon la revendication 6, **caractérisé en ce que** l'ouverture du canal d'aspiration (3), vue de la surface d'ouverture (1.1) est recouverte partiellement par la lamelle de dosage (5).

8. Dispositif selon l'une des revendications 6 et 7, **caractérisé en ce que** la lamelle de dosage (5) est une pièce en tôle.

9. Dispositif selon l'une des revendications 6 à 8, **caractérisé en ce que** la position de la lamelle de dosage (5) sur le canal d'admission d'air (2), l'angle dans lequel la lamelle de dosage (5) montre en direction du sol (4) ou l'étendue en longueur de la lamelle de dosage (5) en direction du sol (4) est réglable.

10. Dispositif selon l'une des revendications 6 à 9, **caractérisé en ce que** la lamelle de dosage (5) présente au niveau de son extrémité inférieure orientée vers le sol (4) une plus grande largeur qu'à l'endroit placé entre le canal d'aspiration (3) et le canal d'admission d'air (2).

11. Dispositif selon l'une des revendications 1 à 10, **caractérisé en ce qu'**elle sert à aspirer des combustibles en morceaux ou en poudre du sol d'un entrepôt de combustibles.

12. Dispositif selon la revendication 11, **caractérisé en ce que** lesdits combustibles sont des pastilles de combustibles.
